# EUROPÄISCHE PATENTSCHRIFT

(11) **EP 1 501 324 B1**
(45) Veröffentlichungstag und Bekanntmachung des Hinweises auf die Patenterteilung: **15.08.2007**
(21) Anmeldenummer: 04015132.6
(22) Anmeldetag: 28.06.2004
(51) Int. Cl.: H04Q 7/32

(54) **Mobilfunkgerät mit ferngesteuerter Wiedereinschaltfunktion**
Mobile radio device with remotely controlled reset function
Dispositif radio mobile avec fonction de reinitialisation controllée à distance

(30) Priorität: 25.07.2003 DE 10334127
(43) Veröffentlichungstag der Anmeldung: 26.01.2005
(73) Patentinhaber: Rohde & Schwarz GmbH & Co. KG, 81671 München (DE)
(72) Erfinder: Ludwig, Peter, 85625 Glonn (DE)
(74) Vertreter: Körfer, Thomas

(56) Entgegenhaltungen:
- WO-A-01/41483
- WO-A-93/22883
- GB-A- 2 380 356
- US-A- 4 449 248

## Beschreibung

Die Erfindung betrifft ein Mobilfunkgerät mit einer Fernsteuereinrichtung, die ein ferngesteuertes Wiedereinschalten ermöglicht.

Bei der Entwicklung von neuer Software z. B. für Testgeräte von Mobilfunksystemen, ist es erforderlich, während des Testablaufs durch das Testgerät Funktionen eines Mobilfunkgeräts zu steuern. Mit Hilfe von Fernsteuerbefehlen können beispielsweise Parameter eines Telefonmoduls verändert werden, die die Übertragung von Informationen zwischen dem Mobilfunkgerät und einer Basisstation oder dem die Basisstation emulierende Testgerät über eine Luftschnittstelle betreffen. Hierzu ist es bekannt, ein Testgerät mit einem Mobilfunkgerät über eine zu der Luftschnittstelle zusätzliche Schnittstelle zu verbinden, so dass von dem Testgerät Fernsteuerbefehle an das Mobilfunkgerät übermittelt werden können, mit denen die betreffenden Parameter eingestellt oder Funktionen ausgeführt werden können. Zum Überprüfen von neuer Software des Testgeräts ist es häufig erforderlich, das Mobilfunkgerät zwischenzeitlich zurück in den Ausgangszustand zu versetzen, wozu das Mobilfunkgerät abgeschaltet wird und erneut eingeschaltet wird.

Dabei entsteht das Problem, dass das Mobilfunkgerät bisher lediglich durch manuelles Betätigen des Ein-/Ausschalters wieder in Betrieb zu nehmen ist. Im eingeschalteten Zustand können durch das Mobilfunkgerät die über die zusätzliche Schnittstelle ankommenden Befehle ausgeführt werden. D.h. im Fernsteuerbetrieb kann an das Mobilfunkgerät ein Ausschaltbefehl übertragen werden, mit dem das Mobilfunkgerät abgeschaltet werden kann. Nachteilig ist jedoch, dass ein erneutes Einschalten nicht auf Grund eines Befehls ausgeführt werden kann, da im ausgeschalteten Zustand keine Befehle durch das Mobilfunkgerät empfangen und verarbeitet werden können.

Aus der WO 93/22883 ist ein Funksystem bekannt, bei dem der Energieverbrauch des Mobilfunkgeräts reduziert wird. Am Ende von übertragenen Nutzdaten wird hierzu von einer Basisstation an das Mobilfunkgerät eine Nachricht übermittelt. Die Übermittlung der Nachricht erfolgt während einer existierenden Verbindung über die einzige vorhandene Luftschnittstelle. Aufgrund der eingehenden Nachricht schaltet das Mobilfunkgerät Teilbereiche in einen Ruhezustand, so dass der gesamte Energieverbrauch des weiterhin eingeschalteten und ansteuerbaren Mobilfunkgeräts reduziert wird.

Aus der WO 01/41483 ist ferner ein Mobilfunkgerät als universelle, programmierbare Steuerung bekannt. Hierzu ist auf dem Mobilfunkgerät ein Zugangsprogramm abgespeichert. Mit Hilfe des Zugangsprogramms ist ein benutzergesteuerter Zugriff auf ein Informationsnetzwerk, beispielsweise das Internet, möglich.

Der Erfindung liegt die Aufgabe zugrunde, ein Mobilfunkgerät zu schaffen, welches ferngesteuert ab- und erneut eingeschaltet werden kann.

Die Aufgabe wird durch das erfindungsgemäße Mobilfunkgerät nach Anspruch 1 gelöst.

Bei dem erfindungsgemäßen Mobilfunkgerät nach Anspruch 1 werden Befehle, die über eine Schnittstelle an das Mobilfunkgerät übermittelt werden, von einer Fernsteuereinrichtung verarbeitet und zur Ausführung den betreffenden Baugruppen des Mobilfunkgeräts übermittelt. Zum Ausführen eines Ausschaltbefehls ist die Fernsteuereinrichtung hierzu mit einer Ein/Ausschaltvorrichtung verbunden, die folglich durch die Fernsteuereinrichtung betätigbar ist. Damit kann das Mobilfunkgerät durch einen beispielsweise durch ein Testgerät an das Mobilfunkgerät übertragenen Ausschaltbefehl abgeschaltet werden. Erfindungsgemäß kann anstelle des Ausschaltbefehls ein spezieller Neustartbefehl an die Fernsteuereinrichtung des Mobilfunkgeräts übertragen werden, solange das Mobilfunkgerät eingeschaltet ist.

Anschließend wird durch das Mobilfunkgerät die Ein-/Ausschaltvorrichtung ein erstes Mal betätigt, womit das Mobilfunkgerät abgeschaltet wird. In ausgeschaltetem Zustand wird auf Grund des in zuvor eingeschaltetem Zustand empfangenen Neustartbefehls die Ein-/Ausschaltvorrichtung ein zweites Mal betätigt, ohne dass hierzu über die Befehlsschnittstelle ein weiterer Befehl empfangen werden muss. Damit kann das Abschalten und anschließende Wiedereinschalten des Mobilfunkgeräts während des Testbetriebs ferngesteuert erfolgen, auch wenn in abgeschaltetem Zustand die Schnittstelle nicht unterstützt wird, so dass von der Fernsteuereinrichtung bei der Schnittstelle ankommende Befehle nur in eingeschaltetem Zustand des Mobilfunkgeräts verarbeitet werden können.

Es lässt sich damit erreichen, dass zum Durchführen eines Testbetriebs das Mobilfunkgerät lediglich einmal durch manuelles Betätigen eines Ein-/Ausschalters eingeschaltet werden muss. Das erneute Einschalten, nach Durchführen eines bestimmten Abschnitts eines Testablaufs, erfolgt dagegen als automatisierte Abfolge des Abschaltens und ein anschließendes Einschalten. Das erneute Einschalten erfolgt dabei nicht nur ohne das Zutun einer Bedienperson, sondern auch unmittelbar oder zumindest in einem definierten Zeitabstand zu dem vorhergehenden Abschaltvorgang, so dass sich bei der Durchführung einer Vielzahl von Aus- und Einschaltzyklen eine erhebliche Verkürzung des gesamten Testablaufs ergibt.

In den Unteransprüchen sind vorteilhafte Weiterbildungen des erfindungsgemäßen Mobilfunkgeräts ausgeführt.

Ein bevorzugtes Ausführungsbeispiel des erfindungsgemäßen Mobilfunkgeräts ist in der Zeichnung dargestellt und wird anhand der nachfolgenden Beschreibung näher erläutert. Es zeigen:
- Fig. 1: eine schematische Darstellung eines durch ein Testgerät ferngesteuerten Mobilfunkgeräts und
- Fig. 2: eine schematische Darstellung des Aufbaus eines erfindungsgemäßen Mobilfunkgeräts.

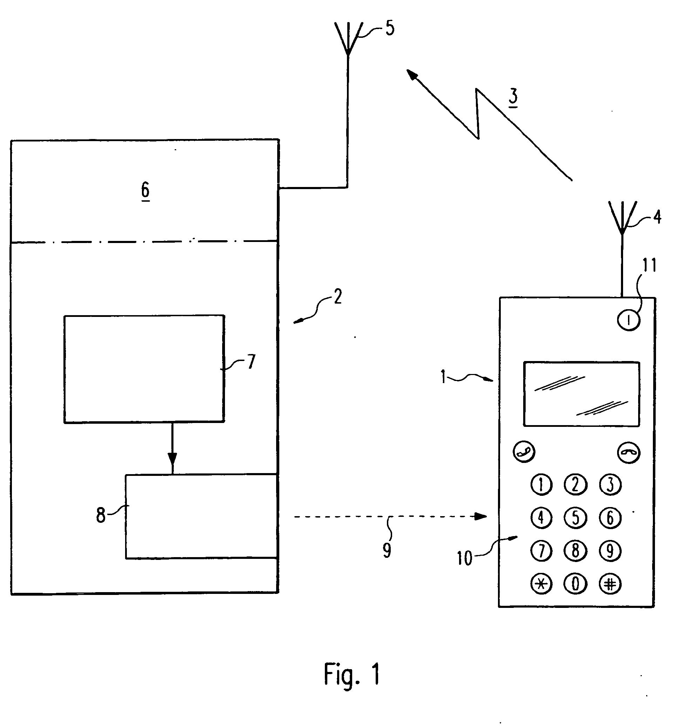

In Fig. 1 ist stark vereinfacht eine Anordnung zum Durchführen von Tests dargestellt, bei der ein Mobilfunkgerät 1 mit einem Testgerät 2 über eine Luftschnittstelle 3 zur Übertragung von beispielsweise Nutzdaten in Verbindung steht. Zur Übertragung von Daten über die Luftschnittstelle 3 weist sowohl das Mobilfunkgerät 1 eine Antenne 4 auf als auch das Testgerät 2 eine Antenne 5 auf. Über die Antennen 4 und 5 wird eine Verbindung aufgebaut, die einem bestimmten Telekommunikationsstandard, beispielsweise GSM, entspricht.

Im dargestellten Ausführungsbeispiel weist der Testgerät 2 hierzu eine Sende-/Empfangseinrichtung 6 auf, die in das Testgerät 2 integriert ist. Alternativ ist es auch denkbar, dass die Verbindung zum Austausch von Daten zwischen dem Mobilfunkgerät 1 und einer Basisstation eines zellulären Mobilfunknetzes aufgebaut wird, so dass während eines Testdurchlaufs z. B. ein Datenaustausch zwischen dem Mobilfunkgerät 1 und einer über die Luftschnittstelle 3 mit dem Mobilfunkgerät 1 verbundenen Datenbank erfolgen kann. In einem solchen Fall wird lediglich der Ablauf des Tests durch das Testgerät 2 bestimmt.

Das Testgerät 2 umfasst eine Software 7. Durch die Software 7 werden für einen Test z.B. Änderungen von Parametern vorgegeben, die über eine Befehlsschnittstelle 8 an das Mobilfunkgerät 1 weitergegeben werden. Zwischen der Befehlsschnittstelle 8 des Testgeräts 2 und dem Mobilfunkgerät 1 wird eine Verbindung 9 aufgebaut, welche unabhängig von der Luftschnittstelle 3 ist. Die Verbindung 9 kann beispielsweise als Infrarot-Verbindung, Funkverbindung, Bluetooth-Verbindung oder auch als kabelgebundene serielle Verbindung ausgebildet sein.

Über die Befehlsschnittstelle 8 und die Verbindung 9 werden an das Mobilfunkgerät 1 Befehle übertragen, mit welchen Parameter einstellbar sind, die die Verbindung zwischen der Sende-/Empfangseinrichtung 6 des Testgeräts 2, das eine Basisstation emuliert, und dem Mobilfunkgerät 1 betreffen. Die Software 7 steuert damit durch das Absetzen von Befehlen über die Schnittstelle 8 und die Verbindung 9 an das Mobilfunkgerät 1 den Testablauf. Die Befehle, die von der Software 7 dabei verwendet werden, können z. B. die von dem GCF (GSM Certification Forum) festgelegten sogenannten "AT Commands" sein, die es ermöglichen, einen einheitlichen Testablauf durch ein einzelnes Testgerät 2 mit sämtlichen Mobilfunkgeräten 1 eines bestimmten Standards, aber unabhängig von den einzelnen Herstellern durchzuführen.

Mit Hilfe der Befehle wird das Mobilfunkgerät 1 ferngesteuert, so dass auf eine manuelle Eingabe eines Bedieners über eine Tastatur 10 verzichtet werden kann. Um das Mobilfunkgerät 1 zwischen verschiedenen Sequenzen eines gesamten Testablaufs in einen definierten Ausgangszustand zubringen, ist es erforderlich, dass jeweils ein Abschnitt eines Testablaufs durch das Einschalten des Mobilfunkgeräts 1 begonnen wird.

Im Gegensatz zu dem bisher erforderlichen manuellen Wiedereinschalten des Mobilfunkgeräts 1 über einen Ein-/Ausschalter 11 ist das erfindungsgemäße Mobilfunkgerät 1 so eingerichtet, dass in eingeschaltetem Zustand während eines Abschnitts des gesamten Testablaufs ein spezieller Neustartbefehl über die Verbindung 9 von einer Fernsteuereinrichtung 13 empfangen werden kann, durch den zunächst das Mobilfunkgerät 1 abgeschaltet wird und in einem zweiten Schritt im abgeschalteten Zustand das Mobilfunkgerät 1 wieder eingeschaltet wird, ohne dass ein Empfangen eines weiteren Befehls erforderlich ist.

Der durch die Software 7 genutzte Satz von Befehlen wird hierzu um den Neustart-Befehl erweitert, der als ein einzelner Befehle an das Mobilfunkgerät 1 übermittelt wird. Zur Ausführung des Befehls werden dann zwei nacheinander ablaufende Routinen ausgeführt, wobei die erste Routine das Mobilfunkgerät 1 vollständig abschaltet, womit auch die Unterstützung der entsprechenden Befehlsschnittstelle 12 des Mobilfunkgeräts 1 für die Verbindung 9 entfällt. In diesem Zustand, in dem das Mobilfunkgerät 1 über die nicht mehr unterstützte Befehlsschnittstelle 12 für die Verbindung 9 keine weiteren Befehle von dem Testgerät 2 empfangen kann, wird die zweite Routine ausgeführt, die noch wegen des Neustart-Befehls aufgerufen wurde, und damit das Mobilfunkgerät 1 erneut eingeschaltet, ohne dass der Ein /Ausschalter 11 manuell betätigt werden muss.

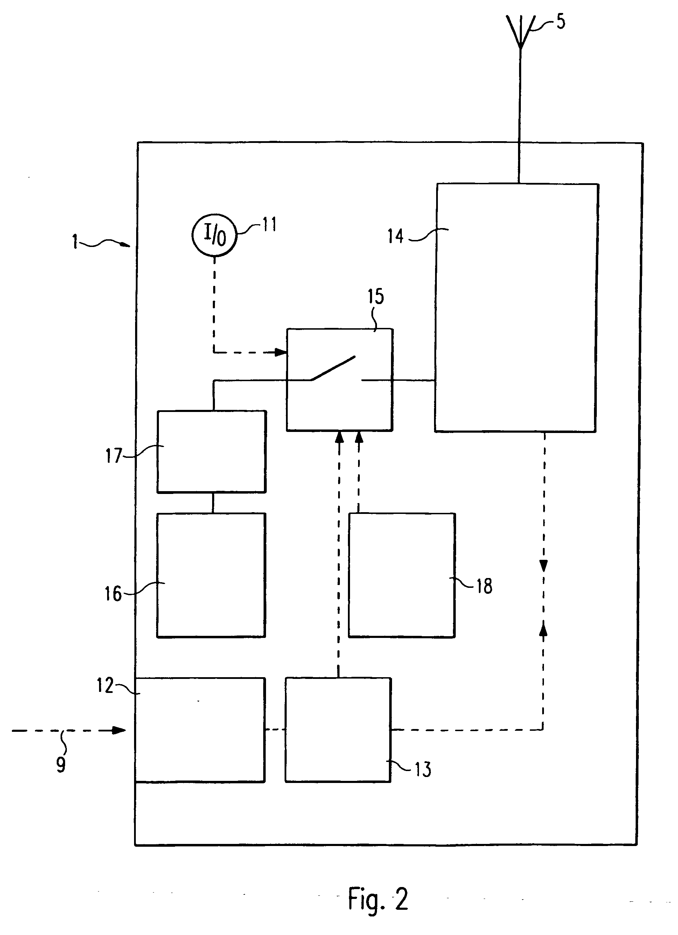

In Fig. 2 ist ein Blockschaltbild eines entsprechend aufgebauten, erfindungsgemäßen Mobilfunkgeräts 1 dargestellt. Das Mobilfunkgerät 1 weist eine Befehlsschnittstelle 12 auf, an der über die Verbindung 9 von dem Testgerät 2 übertragene Befehle ankommen. Die Befehlsschnittstelle 12, die entsprechend den unterschiedlichen möglichen Verbindungen z.B. eine Bluetooth-Schnittstelle, eine Funkschnittstelle, eine serielle Schnittstelle oder eine Infrarotschnittstelle sein kann, ist in dem Mobilfunkgerät 1 mit einer Fernsteuereinrichtung 13 verbunden.

Die über die Verbindung 9 und die Befehlsschnittstelle 12 angekommenen Befehle werden in der Fernsteuereinrichtung 13 verarbeitet, so dass an ein Telefonmodul 14 ("signalling unit") beispielsweise die Luftschnittstelle betreffende Parameter eingestellt werden können. Die Fernsteuereinrichtung 13 wertet hierzu den entsprechenden Befehl aus, der aus einem bestimmten, für einen bestimmten Mobilfunkstandard einheitlichen Satz an Befehlen ausgewählt ist. Das Verändern von Parametern in dem Telefonmodul 14 ist im Gegensatz zu dem herstellerübergreifenden Satz von Befehlen gerätespezifisch.

Um das Mobilfunkgerät 1 abschalten und erfindungsgemäß neu starten zu können, ist die Fernsteuereinrichtung 13 ferner mit einer Ein-/Ausschaltvorrichtung 15 verbunden. Die Ein-/Ausschaltvorrichtung 15 wird beispielsweise beim Ausführen einer Ausschaltroutine über die Verbindung 9 und die Schnittstelle 12 von der Fernsteuereinrichtung 13 betätigt, wodurch das Mobilfunkgerät 1 vollständig abgeschaltet wird. Durch die Ein-/Ausschaltvorrichtung 15 wird die Stromzufuhr zu dem Telefonmodul 14 unterbrochen. Die Ein-/Ausschaltvorrichtung 15 ist hierzu einerseits mit dem Telefonmodul 14 verbunden und andererseits mit einer spannungsstabilisierenden Baugruppe 17 verbunden, die ihrerseits eingangsseitig mit einem Akku 16 verbunden ist.

Kommt ein Neustartbefehl bei der Schnittstelle 12 über die Verbindung 9 an, so wird auf Grund dessen von der Fernsteuereinrichtung 13 die Ein-/Ausschaltvorrichtung 15 ein erstes Mal betätigt und eine Ausschaltroutine ausgeführt, so dass das Mobilfunkgerät 1 abgeschaltet wird. Damit ist auch die Fernsteuereinrichtung 13 und insbesondere die Schnittstelle 12 nicht mehr aktiv und weitere Befehle können über die Verbindung 9 nicht an das Mobilfunkgerät 1 übermittelt werden. In diesem Zustand, in dem eine ferngesteuerte Bedienung des Mobilfunkgeräts 1 nicht möglich ist, wird durch die Fernsteuereinrichtung 13 die Ein-/Ausschaltvorrichtung 15 ein zweites Mal durch Ausführen einer Einschaltroutine betätigt. Durch das erneute Betätigen der Ein-/Ausschaltvorrichtung 15 wird das Mobilfunkgerät 1 wieder eingeschaltet, ohne dass der Ein-/Ausschalter 11 durch einen Bediener manuell betätigt werden muss. Da sowohl die Fernsteuereinrichtung 13 als auch der Ein-/Ausschalter 11 auf dieselbe Ein-/Ausschaltvorrichtung 15 zugreifen, liegt in der Funktion kein Unterschied zwischen einem manuellen Einschaltvorgang und einem ferngesteuerten Einschaltvorgang.

Gemäß einer bevorzugten Ausführungsform des erfindungsgemäßen Mobilfunkgeräts 1 ist die Ein-/Ausschaltvorrichtung 15 ferner mit einem Uhrzeitmodul 18 verbunden. Dies ist insbesondere vorteilhaft, um eine einfache Erweiterung von Mobilfunkgeräten zu ermöglichen, die sich unabhängig von einem manuellen Betätigen des Ein-/Ausschalter 11 z. B. auf Grund einer in dem Urzeitmodul 18 integrierten Weckfunktion bereits selbsttätig einschalten können.

Der Neustartbefehl ist vorzugsweise so aufgebaut, dass er den bereits bestehenden und im Mobilfunkstandard festgelegten Satz von Befehlen als weiterer Einzelbefehl ergänzt. Das bedeutet insbesondere, dass der neue Neustartbefehl die Befehlssyntax der bereits bekannten Befehle verwendet.

## Patentansprüche

1. Mobilfunkgerät mit einer Ein-/Ausschaltvorrichtung (15) und einer Luftschnittstelle (3),
**dadurch gekennzeichnet,**
**dass** das Mobilfunkgerät eine Fernsteuereinrichtung (13) aufweist, die mit einer Befehlsschnittstelle (12) zum Empfangen von Fernsteuerkommandos und mit der Ein-/Ausschaltvorrichtung (15) verbunden ist,
**dass** die Befehlsschnittstelle (12) zusätzlich zu einer Luftschnittstelle (3) zur Übertragung von Nutzdaten vorhanden ist,
**dass** die Fernsteuereinrichtung so ausgestaltet ist, dass bei eingeschaltetem Mobilfunkgerät (1) durch die Fernsteuereinrichtung (13) nach Empfangen eines Ausschaltkommandos durch Betätigen der Ein-/Ausschaltvorrichtung (15) das Mobilfunkgerät (1) vollständig abgeschaltet wird und
**dass** die Fernsteuereinrichtung so ausgestaltet ist, dass nach dem Empfangen eines Neustartbefehls das Mobilfunkgerät (1) durch Betätigen der Ein-/Ausschaltvorrichtung (15) vollständig abgeschaltet und danach automatisch durch erneutes Betätigen der Ein-/Ausschaltvorrichtung (15) das Mobilfunkgerät (1) wieder eingeschaltet wird.

2. Mobilfunkgerät nach Anspruch 1,
**dadurch gekennzeichnet,**
**dass** die Ein-/Ausschaltvorrichtung (15) derart ausgestaltet ist, dass sie sowohl von der Fernsteuereinrichtung (13) als auch einem Uhrzeitmodul (18) betätigbar ist.

3. Mobilfunkgerät nach Anspruch 1 oder 2,
**dadurch gekennzeichnet,**
**dass** die Befehlsschnittstelle (12) eine Bluetooth Schnittstelle ist.

4. Mobilfunkgerät nach Anspruch 1 oder 2,
**dadurch gekennzeichnet,**
**dass** die Befehlsschnittstelle (12) eine Funkschnittstelle ist.

5. Mobilfunkgerät nach Anspruch 1 oder 2,
**dadurch gekennzeichnet,**
**dass** die Befehlsschnittstelle (12) eine serielle Schnittstelle ist.

6. Mobilfunkgerät nach Anspruch 1 oder 2,
**dadurch gekennzeichnet,**
**dass** die Befehlsschnittstelle (12) eine Infrarotschnittstelle ist.

7. Mobilfunkgerät nach einem der Ansprüche 1 bis 6,
**dadurch gekennzeichnet,**
**dass** der Neustartbefehl ein einen in einem Mobilfunkstandard vorgesehenen Befehlssatz ergänzender Befehl ist.

## Claims

1. Mobile-telephone device with an on/off switching device (15) and an air interface (3),
**characterised in that**
the mobile-telephone device provides a remote-control device (13), which is connected to a command interface (12) for the reception of remote-control commands and to the on/off switching device (15);
that the command interface (12) is provided additionally to an air interface (3) for the transmission of useful data;
that the remote-control device is designed in such a manner that, when the mobile-telephone device (1) switched on, after the receipt of an off-command from the remote-control device (13), the mobile-telephone device (1) is completely switched off by an activation the on/off switching device (15); and
that the remote-control device is designed in such a manner that, after the receipt of a re-start command, the mobile-telephone device (1) is completely switched off by an activation of the on/off switching device (15) and then switched on again automatically by a re-activation the on/off switching device (15).

2. Mobile-telephone device according to claim 1,
**characterised in that**
the on/off switching device (15) is designed in such a manner that it can be activated both by the remote-control device (13) and also by a clock-time module (18).

3. Mobile-telephone device according to claim 1 or 2,
**characterised in that**
the command interface (12) is a Bluetooth interface.

4. Mobile-telephone device according to claim 1 or 2,
**characterised in that**
the command interface (12) is a radio interface.

5. Mobile-telephone device according to claim 1 or 2,
**characterised in that**
the command interface (12) is a serial interface.

6. Mobile-telephone device according to claim 1 or 2,
**characterised in that**
the command interface (12) is an infrared interface.

7. Mobile-telephone device according to any one of claims 1 to 6,
**characterised in that**
the re-start command is a command supplementing a command set provided in a mobile-telephone standard.

## Revendications

1. Appareil de téléphonie mobile comprenant un dispositif de connexion/déconnexion (15) et une interface radio (3),
**caractérisé en ce que**
l'appareil de téléphonie mobile présente un dispositif de télécommande (13), qui est relié à une interface d'instructions (12) pour la réception d'instructions de télécommande et au dispositif de connexion/déconnexion (15),
**en ce que** l'interface d'instructions (12) est présente en supplément d'une interface radio (3) pour la transmission de données utiles,
**en ce que** le dispositif de télécommande est conçu de telle sorte que, lorsque l'appareil de téléphonie mobile (1) est enclenché, l'appareil de téléphonie mobile (1) est déconnecté complètement par le dispositif de télécommande (13) après la réception d'une instruction de déconnexion par l'actionnement du dispositif de connexion/déconnexion (15), et
**en ce que** le dispositif de télécommande est conçu de telle sorte que, après la réception d'une instruction de redémarrage, l'appareil de téléphonie mobile (1) est complètement déconnecté par l'actionnement du dispositif de connexion/déconnexion (15) et l'appareil de téléphonie mobile (1) est réenclenché ensuite automatiquement par un nouvel actionnement du dispositif de connexion/déconnexion (15).

2. Appareil de téléphonie mobile selon la revendication 1,
**caractérisé en ce que**
le dispositif de connexion/déconnexion (15) est conçu de telle sorte qu'il peut être actionné aussi bien par le dispositif de télécommande (13) que par un module de minuterie (18).

3. Appareil de téléphonie mobile selon la revendication 1 ou 2,
**caractérisé en ce que**
l'interface d'instructions (12) est une interface Bluetooth.

4. Appareil de téléphonie mobile selon la revendication 1 ou 2,
**caractérisé en ce que**
l'interface d'instructions (12) est une interface radio.

5. Appareil de téléphonie mobile selon la revendication 1 ou 2,
**caractérisé en ce que**
l'interface d'instructions (12) est une interface série.

6. Appareil de téléphonie mobile selon la revendication 1 ou 2,
**caractérisé en ce que**
l'interface d'instructions (12) est une interface infrarouge.

7. Appareil de téléphonie mobile selon l'une ou quelconque des revendications 1 à 2,
**caractérisé en ce que**
l'instruction de redémarrage est une instruction complétant un exemple d'instructions prévu dans un standard de téléphonie mobile.
